# EUROPEAN PATENT APPLICATION

(11) **EP 2 415 350 A1**
(43) Date of publication of application: **08.02.2012**
(21) Application number: 10171238.8
(22) Date of filing: 29.07.2010
(51) Int. Cl.: A23D 7/005, A23L 1/226

(54) **Fat spreads with improved buttery flavour and/or taste**

(71) Applicant: Zaklady Tluszczowe "Kruszwica" Spola Akcyjna, 88-150 Kruszwica (PL)
(72) Inventor: The designation of the inventor has not yet been filed
(74) Representative: Maureau, Philippe

(57) **Abstract**

A fat spread comprising a flavour agent containing :
- from 55% to 90% of 2-furfuryl alcohol;
- from 5% to 20% of 2-acetylpyrrole;
- from 3% to 15% of 2-acetylpyridine;
- from 1% to 10% of alpha-furfuryl mercaptan; and
- from 0.1% to 10% of 2-ethyl-3-methylpyrazine.

A flavour agent containing :
- from 45% to 65% of 2-furfuryl alcohol;
- from 5% to 20% of 2-acetylpyrrole;
- from 3 % to 15 % of 2-acetylpyridine;
- from 1 % to 10% of alpha-furfuryl mercaptan;
- from 0.1% to 8% of2-ethyl-3-methylpyrazine;
- from 0.1% to 8% of S-sulfuryl acetothioate; and
- from 5% to 20% of 5-methylquinoxaline.

## Description

The present invention relates to a new fat spread, especially margarine, having a improved buttery taste and/or flavour, a new flavour agent and the use of such flavour agent to improve the buttery taste and/or flavour of fat spreads.

Fat spreads, such as margarine, are butter substitutes which have been discovered for more than 100 years.

Fat spreads and butter both consist in a water-in-oil emulsion, with tiny droplets of water dispersed uniformly throughout a fat phase which is partially in a crystalline form.

One of the most famous fat spread used to substitute butter is the margarine.

The basic method for making margarine consists in emulsifying a blend of purified vegetable and/or animal oils and fats with fermented skimmed milk, chilling the mixture to solidify it and working it to improve the texture. Modem margarines can be made from any of a wide variety of animal or vegetable oils and fats, mixed with skimmed milk, salt, and emulsifiers. Like butter, margarine is about 80% fat chosen among a wide variety of animal or vegetable fats modified or not, with added emulsifiers; 20% water phase and milk solids; organic acids to adjust the acidity; and salt. Preservatives can also be added. It is also flavoured, coloured, and eventually fortified with vitamin A, vitamin D or vitamin E to match butter's nutritional contribution to the human diet.

Three main types of fat spreads exist :
- traditional margarine to replace butter, which contains high quantities of saturated fats, mostly made from vegetable oils;
- soft margarine, more generally named as yellow fat spreads, high in mono- or polyunsaturated fats, made for example from safflower, sunflower, soybean, cottonseed, rapeseed, or olive oil;
- pure or hard (and generally uncoloured) fats for cooking or baking (also referred to as "shortening").

In the consumers' eyes, fat spreads suffer from important drawbacks in comparison to the butter, among which their colour, their taste or their flavour.

Despite fat spread are recommended and recognised for their health values in comparison to butter, they suffer from the same drawbacks in comparison to butter, which are their natural colour, taste and flavour.

Fat spreads naturally appear white or almost white. In the past years, several solutions have been proposed to provide fat spreads having a colour similar to butter. For example, UK patent application GB-A-2066645 discloses a mixture of natural colorants imparting a desirable yellow colour to margarine.

Despite the problem of the colour has been solved in the past years, most of the consumers still complain about the taste and/or flavour of fat spreads in comparison to butter, either when they are consumed as such, for example when they are spread on bread, or when they are used for cooking or topping, the food thus prepared evidencing a "fat spread taste".

In the past, some solutions have been proposed to improve the taste and/or flavour of fat spreads and to make it closer to the taste and/or flavour of butter. For example UK patent application published as GB-A-2066645 discloses the use of Amadori rearrangement compounds, having melting points above 1700°C, of 6-deoxy-aldohexoses and alpha amino-acids, heated above 900°C yields to a mixture of compounds which can impart to a food or ingredient for a foodstuff a rich, full aroma and/or flavour which is reminiscent of cream and/or butter with a pleasant note, reminiscent of bread.

UK patent application published as GB-A-1273263 further discloses the use of 'supercooked' milk with a cooked flavour for preparing margarine with a particularly desirable butter-like taste.

US patent application published as US 2009/0208426 the use of 2,5-diacetyl-3a,5,6,6a-tetrahydro-6a-hydroxy-2,3a,5-trimethylfuro[2,3-d]-1,3-dioxole (diacetyl trimer) for various purpose, including for imparting, intensifying and/or modifying a sweet, buttery, cream-like and/or creamy flavour.

Finally, UK patent application published as GB-A-0931964 teaches the addition of a minute amount of phenylacetaldehyde after cooking by any suitable means (such as by spraying with a dilute solution of it) for producing a butter-like flavour in fat cooked foodstuffs after cooking.

Nevertheless, either the fat spreads thus produced have finally evidenced a unsatisfactory buttery taste and/or flavour in the eyes of the consumers, or the proposed solutions have proved to be complicated or to imply sophisticated technologies increasing drastically the costs of the fat spread thus produced.

Accordingly, there still exists today a strong need for a fat spread, especially margarine, evidencing a taste and/or a flavour close to the taste and/or flavour of butter.

A flavour agent containing 2-furfuryl alcohol, 2-acetylpyrrole, 2-acetylpyridine, alpha-furfuryl mercaptan and 2-ethyl-3-methylpyrazine is used to increase the bread flavour in bakery. It is for example sold under the name Lucta Corteza de Pan 50095 by Lucta. To the date, such flavour agent has never been used to increase the buttery taste and/or flavour of foodstuffs and such flavour agent has never been incorporated into a fat spread prior to the present invention.

It has now surprisingly been found that by incorporating such flavour agent in a fat spread, especially margarine, the taste and/or flavour of said fat spread was improved and detected as closer to the taste and/or flavour of butter by consumers.

Accordingly, the present invention first relates to a fat spread comprising a flavour agent containing :
- from 55% to 90% of 2-furfuryl alcohol;
- from 5% to 20% of 2-acetylpyrrole;
- from 3 % to 15 % of 2-acetylpyridine;
- from 1 % to 10% of alpha-furfuryl mercaptan; and
- from 0.1 % to 10% of 2-ethyl-3-methylpyrazine.

In the context of the present invention :
- 2-furfuryl alcohol corresponds to compound 98-00-0 under the CAS configuration, which can also be designated as 2-furanmethanol, 2-furancarbinol, 2-furanmethanol, furfural alcohol, furfuranol, 2-furfuryl alcohol, 2-furyl carbinol, alpha-furylcarbinol, 2-furyl methanol or 2-hydroxymethylfuran;
- 2-acetylpyrrole corresponds to compound 1072-83-09 under the CAS configuration, which can also be designated as 1-(1H-pyrrol-2-yl)-ethanone or methyl-2-pyrrolyl ketone;
- 2-acetylpyridine corresponds to compound 1122-62-9 under the CAS configuration, which can also be designated as 1-(2-pyridinyl)-ethanone ;
- alpha-furfuryl mercaptan corresponds to compound 98-02-2 under the CAS configuration, which can also be designated as 2-furanmethanethiol;
- 2-ethyl-3-methylpyrazine corresponds to compound 15707-23-0 under the CAS configuration;
- S-sulfuryl acetothioate corresponds to compound 13678-68-7 under the CAS configuration, which can also be designated as S-(furan-2-ylmethyl)ethanethioate, furfuryl thioacetate, thioacetic acid S-furfuryl ester; S-furfurylethanethioate;
- 5-methylquinoxaline corresponds to compound 13708-12-8 under the CAS configuration;
- "fat spread" designates any spreadable fat as defined in EC Regulation 2991/94 that is any product in the form of a solid, malleable emulsion at ambient temperature, principally of the water-in-oil type, derived from solid and/or liquid vegetable and/or animal fats including milk-fat suitable for human consumption, with a fat content of less than 90 % of the fat spread, and with a milk-fat content of not more than 80 % of the fat content; among which margarine (including liquid margarine) blends, reduced-fat spread or low-fat spread. Preferably, fat spread designates margarine;
- unless otherwise specified all % values are weight %.

The fat spread according to the present invention has received significant better scores than other fat spreads exempt from said flavour agent in terms of buttery taste and/or flavour.

The present invention relates to a fat spread comprising a flavour agent as defined above. Preferably, the flavour agent incorporated in the fat spread possess the following characteristics, taken individually or in combination :
- the flavour agent contains from 60% to 90%, preferably from 65% to 85% of 2-furfuryl alcohol;
- the flavour agent contains from 7% to 18%, preferably from 10% to 15% of 2-acetylpyrrole;
- the flavour agent contains from 5% to 12%, preferably from 7% to 10% of 2-acetylpyridine;
- the flavour agent contains from 2% to 8%, preferably from 3% to 6% of alpha-furfuryl mercaptan; and/or
- the flavour agent contains from 0.2% to 8%, preferably from 0.3% to 6% of 2-ethyl-3-methylpyrazine.

Still preferably, the flavour agent further contains two additional compounds S-sulfuryl acetothioate and 5-methylquinoxaline. Accordingly the present invention further relates to a fat spread comprising a flavour agent containing :
- from 45% to 65% of 2-furfuryl alcohol;
- from 5% to 20% of 2-acetylpyrrole;
- from 3 % to 15 % of 2-acetylpyridine;
- from 1 % to 10% of alpha-furfuryl mercaptan;
- from 0.1% to 8% of 2-ethyl-3-methylpyrazine;
- from 0.1% to 8% of S-sulfuryl acetothioate; and
- from 5% to 20% of 5-methylquinoxaline.

Even more preferably, the flavour agent incorporated in the fat spread possess the following characteristics, taken individually or in combination :
- the flavour agent contains from 50% to 65%, preferably from 55% to 65% of 2-furfuryl alcohol;
- the flavour agent contains from 10% to 20%, preferably from 10% to 15% of 2-acetylpyrrole;
- the flavour agent contains from 4% to 10%, preferably from 5% to 10% of 2-acetylpyridine;
- the flavour agent contains from 1% to 7%, preferably from 3 % to 7% of alpha-furfuryl mercaptan;
- the flavour agent contains from 0.2% to 5%, preferably from 0.3% to 2% of 2-ethyl-3-methylpyrazine;
- the flavour agent contains from 0.2% to 5%, preferably from 0.3% to 2% of S-sulfuryl acetothioate ; and/or
- the flavour agent contains from 10% to 20%, preferably from 10% to 15% of 5-methylquinoxaline.

The fat spread according to the present invention may contain said flavour agent in any proportion necessary for obtaining the butter taste and/or flavour expected. Preferably, the fat spread according to the present invention contains from 0.001% to 1%, preferably from 0.01% to 0.1% of a flavour agent as defined above.

In addition to the flavour agent, the fat spread may further contain some classical ingredients such as butter and/or dairy components among which cream, yogurt and quarg; emulsifiers among which monoglycrides, diglycerides, lecithins, polyricinoleate and polyglycerol; annatto or beta carotene; vitamin A; vitamin D; vitamin E; salt; citric acid; preservatives among which sorbic acid or its salts and EDTA; thickeners among which gelatine, starches and pectines; flavour agents other than flavour agents according to the invention; water.

Fat spread according to the present invention can be prepared according to classical processes known by the skilled artisan. As an example, fat spread according to the present invention can be prepared by a process comprising the following steps :
- preparation of a concentrated water soluble ingredients such as salt, acids, thickeners, dairy solids, preservatives, flavour agents etc... which are dissolved in water fats in the desired proportion in weighing tanks;
- preparation of a concentrated oil soluble ingredients such as emulsifiers, colorants, flavour, vitamins etc... which are blended with fats in the desired proportion in weighing tanks;
- each blend is carefully homogenized by stirring;
- emulsification of the thus obtained water phase and fat phase in a stirring tank in a ratio that may vary from 20/80 in full fat products to 80/20 in very light products; or, alternatively, the fat phase and the water phase are mixed together by using a proportioning pump;
- heating the obtained emulsion to insure a perfect microbiological safety to the finished product;
- cooling said emulsion in dedicated equipments under the melting point of the fat blend to allow crystallisation while submitting to high shear to allow development of tiny fat crystals necessary.

The flavour agent as defined above has never been used to improve the buttery taste and/or flavour of fat spreads. Accordingly, the present invention also relates to the use of a flavour agent as defined above for increasing the buttery taste and/or flavour of a fat spread in comparison to a fat spread that does not contain said flavour agent.

Some of the flavour agents defined above are novel. Accordingly, the present invention further relates to a flavour agent containing :
- from 45% to 65% of 2-furfuryl alcohol;
- from 5% to 20% of 2-acetylpyrrole;
- from 3 % to 15 % of 2-acetylpyridine;
- from 1 % to 10% of alpha-furfuryl mercaptan;
- from 0.1% to 8% of2-ethyl-3-methylpyrazine;
- from 0.1% to 8% of S-sulfuryl acetothioate; and
- from 5% to 20% of 5-methylquinoxaline.

Preferably, the flavour agent according to the present invention possess the following characteristics, taken individually or in combination :
- the flavour agent contains from 50% to 65%, preferably from 55% to 65% of 2-furfuryl alcohol;
- the flavour agent contains from 10% to 20%, preferably from 10% to 15% of 2-acetylpyrrole;
- the flavour agent contains from 4% to 10%, preferably from 5% to 10% of 2-acetylpyridine;
- the flavour agent contains from 1% to 7%, preferably from 3% to 7% of alpha-furfuryl mercaptan;
- the flavour agent contains from 0.2% to 5%, preferably from 0.3% to 2% of 2-ethyl-3-methylpyrazine;
- the flavour agent contains from 0.2% to 5%, preferably from 0.3% to 2% of S-sulfuryl acetothioate ; and/or
- the flavour agent contains from 10% to 20%, preferably from 10% to 15% of 5-methylquinoxaline.

The present invention will now be illustrated in a non-limited manner by the following examples.

### Example 1 - Flavour agent

An example of flavour agent according to the invention is reported in the Table 1 below :

**Table 1**

| **Ingredients** | **% (w/w)** |
|---|---|
| Furfuryl alcohol | 60.81 |
| 2-acetylpyrrole | 12.16 |
| 2-acetylpyridine | 7.60 |
| Alpha-furfurylmercaptane | 4.56 |
| 2-ethyl-3-methylpyrazine | 0.61 |
| Furfuryl thioacetate | 0.58 |
| 5-methylquinoxaline | 13.68 |

### Example 2 - Margarine

An example of margarine composition according to the invention is reported in the Table 2 below :

**Table 2**

| **Ingredients** | **% (w/w)** |
|---|---|
| **Fat phase** | **60** |
| *Emulsifiers* | *0.4* |
| *Beta carotene (30% sol.)* | *0.002* |
| *Vitamin A + D solution* | *0.003* |
| *Butter* | *1* |
| *Flavour agent* | *0.03* |
| *Flavour agent pursuant to example I* | *0.03* |
| *Fat blend* | *s.q. to 60* |
| **Water phase** | **40** |
| *Salt* | *0.3* |
| *Citric acid* | *0.05* |
| *Preservative* | *0.08* |
| *Skimmilk powder* | *1* |
| *Water* | *s.q. to 40* |

### Example 3 - Method of detection

The following procedure describes an example of method for detecting the main specific components constituting the flavour agent according to the present invention at trace level in margarines by capillary gas chromatography / mass spectrometry using SIM method.

### 1. Miscellaneous

To detect the flavour components at trace level in margarines, an analytical method sensitive enough to detect ppb (µg/l) quantities and selective enough to avoid confusing the different components with margarine interferences is needed.

To get all the mentioned requirements, an analytical method by capillary gas chromatography (high separation capacity) and detection by mass spectrometry with SIM method (single ion monitoring) was developed (high sensitivity and specificity).

To improve the chromatographic analysis (made on Agilent 6890 GC), a simple chloroform extraction was made and fats were removed from the chromatographic column using a backflush method.

### 2. Reagents and instruments

### Standards

0.1 g of each flavour component (furfuryl alcohol, 2-acetylpyrrole, 2-acetylpyridine, alpha-furfuryl mercaptan, 2-ethyl-3-methylpyrazine, furfuryl tioacetate and 5-methylquinoxaline), of the highest purity available are introduced in a 100 ml beaker and make up with chloroform PA.
A 1000 ppm (mg/l) mother solution is thus obtained, which will be used to prepare the standards.

This solution should be kept in a refrigerator (4°C). Its shelf life is of 1 year.

Standards solutions of 100 ppm, 10 ppm, 1 ppm, 0.1 ppm and 0.01 ppm are prepared by dilution of the mother solution.

### Instruments

### Automatic Injector CTC Combi PAL

Chromatograph : HP-6890
Mass Selective Detector : HP-5973N
Column: Supelcowax10, 30 m x 0.25 mm. I.D. x 0.25 µm

### 3. Operating procedure

### Margarine extraction

0.5 g of margarine are introduced in a 2 ml glass vial and 0.5 ml of chloroform PA is added. The vial is closed with a silicone septum and an aluminium cap and is agitated until complete dissolution of the margarine.

A turbid solution is thus obtained.

The vial is then agitated for a couple of minutes. A clear chloroform solution is obtained with a little upper water layer in the top of the vial.

The chloroform bottom layer is injected in the GC/MS.

### Chromatographic conditions

### Oven :

Initial temperature : 60°C
Initial time : 2 min
Rate : 15°C/min.
Final temperature: 230°C
Final time : 0 min

### Injector :

Carrier gas : helium
Injector initial pressure : about 133 Kpa
Outlet pressure : 28 kPa
Constant flow : 1.5 ml/min
Injection temperature : 250°C
Injection volume: 1 µl
Injection type : splitless 2 min
Glass insert : high temperature insert without glass wool
Splitless valve : open after 2 min at 100 ml/min

### Backflush :

QuickSwap device
Outlet pressure : 328 kPa
Time : 5 min
Injector flow during backflush : 0.5 ml/min
Saver flow 900 ml/min at 13 min.
Oven temperature : 230°C

### MSD Detector :

MS transfer line temperature : 250°C
   MS source temperature : 230°C
   MS source temperature : 150°C
Solvent delay : 7.30 min
   Stop time : 13.33 min
SIM/SCAN simultaneous:
   Scan from 35 to 300 amu

SIM mass spectral fragments obtained are reported in the table 3 below.

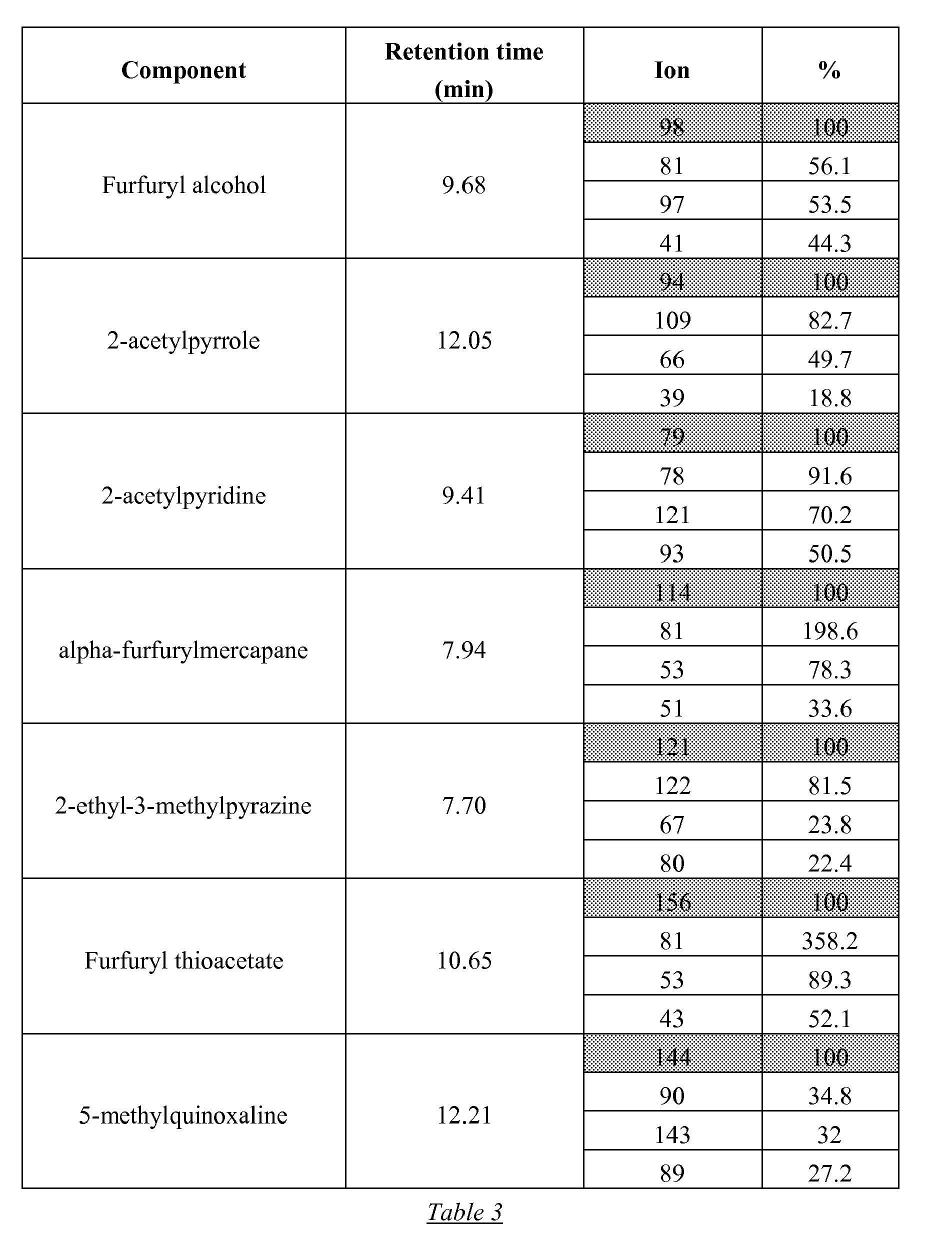

The first ion reported for each product is used to quantify, the rest are qualifier ions.

### Working method

The most concentrated standard is injected under the described conditions to check whether the peaks elute at correct times and that there are not interferences present.

The rest of standards is injected by decreasing concentration order.

The extracted samples are optionally diluted (if there are not between the calibration curves ranges) and then injected.

The results are thus calculated, taking into consideration recoveries for different margarines and the purity of each standard.

### Calculation of results

Results can be calculated for each flavour component by external standard method, when recoveries are known for the margarine analyzed.

When recoveries were not known the standard addition method is preferred.

### Results

For standard table margarine (60% fat) prepared in our company containing these flavour compounds, the following recoveries were found (Table 4) :

**Table 4**

| **Component** | **Recovery** |
|---|---|
| Furfuryl alcohol | 83.9 |
| 2-acetylpyrrole | 69.2 |
| 2-acetylpyridine | 76.0 |
| alpha-furfurylmercapane | 61.7 |
| 2-ethyl-3-methylpyrazine | 86.6 |
| Furfuryl thioacetate | 104.2 |
| 5-methylquinoxaline | 69.8 |

Working with standards all components were linear in the 10 ppm - 0.01 ppm range, and detection limits were under 0.01 ppm.

### Example 4 - Consumers' test results

A consumers' test has been conducted to compare 4 different margarines (margarines A to D).
Margarine A corresponds to the margarine as disclosed in example 2.
Margarine B corresponds to margarine A without the flavour agent.
Margarine C corresponds to a commercial margarine without the flavour agent.
Margarine D corresponds to a commercial margarine without the flavour agent

### 1. Method

Sequential-monadic blind taste test in which every respondent has tested 3 margarines out of margarines A to D.

Following the test, quantitative in-hall face-to-face interviews are conducted using CAPI (Computer Assisted Personal Interview) method during almost 30 minutes.

### 2. Criteria

The panel is made of 240 women, 30-45 years old, with families, employed or working on their own. They are mother of at least 1 child between 3 and 15 years old and are in charge of running the household or making the purchase.

33% of these women are regular consumers of margarine B, 33% are regular consumers of margarine C and 33% are regular consumers of margarine D.

Various questions have been submitted to the panel of consumers concerning the taste of the margarines A to D to evaluate the following criteria :
➢ overall liking/tastiness;
➢ intensity;
➢ naturalness freshness;
➢ saltiness;
➢ sourness;
➢ bitterness;
➢ greasiness; and
➢ **buttery taste and/or flavour**

### 3. Results

### Question I : How buttery is the aroma of this product

The results are reported in the Table 5 below :

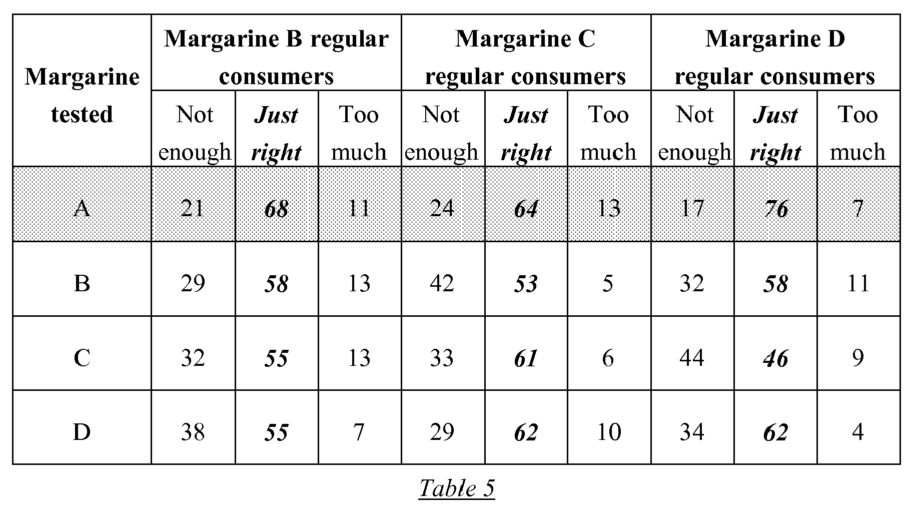

### Question 2 : Would you say that the taste of product is not buttery enough or too buttery

The results are reported in the Table 6 below :

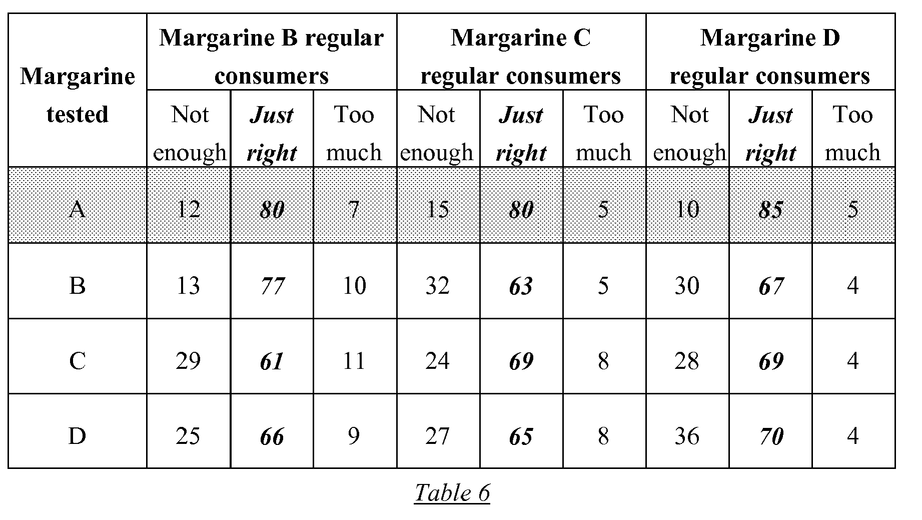

### Question 3 : Would you say this product is ...

The results are reported in the Table 7 below :

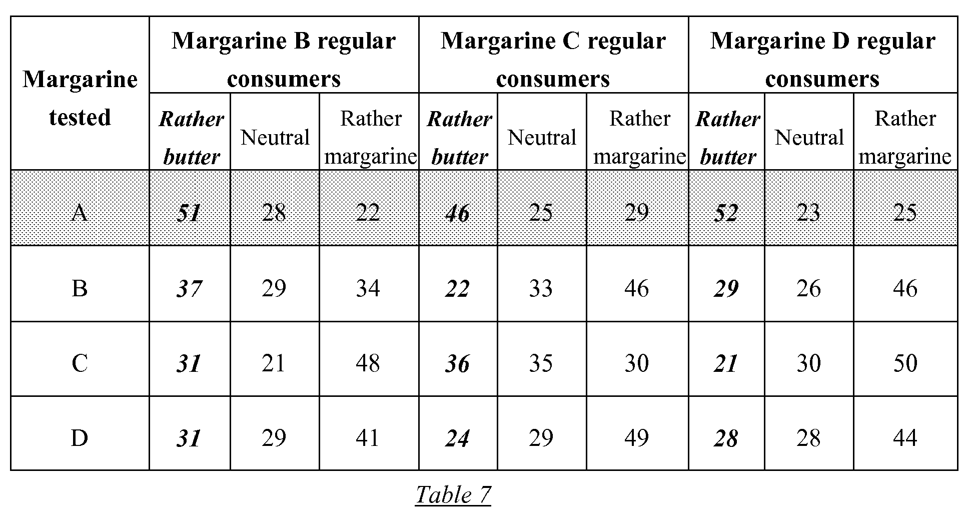

### Conclusion

The above results clearly and unambiguously evidence that the margarine according to the present invention (margarine A) which contained the flavour agent has received significant better scores than margarines B to D exempt from said flavour agent in terms of buttery taste and/or flavour.

## Claims

1. A fat spread comprising a flavour agent containing :
- from 55% to 90% of 2-furfuryl alcohol;
- from 5% to 20% of 2-acetylpyrrole;
- from 3% to 15% of 2-acetylpyridine;
- from 1% to 10% of alpha-furfuryl mercaptan; and
- from 0.1% to 10% of 2-ethyl-3-methylpyrazine.

2. A fat spread according to claim 1, **characterised in that** the flavour agent contains :
- from 45% to 65% of 2-furfuryl alcohol;
- from 5% to 20% of 2-acetylpyrrole;
- from 3 % to 15 % of 2-acetylpyridine;
- from 1 % to 10% of alpha-furfuryl mercaptan;
- from 0.1% to 8% of2-ethyl-3-methylpyrazine;
- from 0.1% to 8% of S-sulfuryl acetothioate; and
- from 5% to 20% of 5-methylquinoxaline.

3. A fat spread according to claim 2, **characterised in that** the flavour agent contains from 55% to 65% of 2-furfuryl alcohol.

4. A fat spread according to claim 2 or 3, **characterised in that** the flavour agent contains from 10% to 15% of 2-acetylpyrrole.

5. A fat spread according to any of claims 2 to 4, **characterised in that** the flavour agent contains from 5% to 10% of 2-acetylpyridine.

6. A fat spread according to any of claims 2 to 5, **characterised in that** the flavour agent contains from 3% to 7% of alpha-furfuryl mercaptan.

7. A fat spread according to any of claims 2 to 6, **characterised in that** the flavour agent contains from 0.3% to 2% of 2-ethyl-3-methylpyrazine.

8. A fat spread according to any of claims 2 to 7, **characterised in that** the flavour agent contains from 0.3% to 2% of S-sulfuryl acetothioate.

9. A fat spread according to any of claims 2 to 8, **characterised in that** the flavour agent contains from 10% to 15% of 5-methylquinoxaline.

10. A fat spread according to any of claims 1 to 9, **characterised in that** it is a margarine.

11. A fat spread according to any of claims 1 to 10, **characterised in that** it contains from 0.001 % to 1 % of flavour agent.

12. Use of a flavour agent as defined in any of claims 1 to 9 for increasing the buttery taste and/or flavour of a fat spread in comparison to a fat spread that does not contain said flavour agent.

13. A flavour agent as defined in any of claims 2 to 9.
